# EUROPÄISCHE PATENTANMELDUNG

(11) **EP 1 223 693 A2**
(43) Veröffentlichungstag der Anmeldung: **17.07.2002**
(21) Anmeldenummer: 01000772.2
(22) Anmeldetag: 19.12.2001
(51) Int. Cl.: H04B 10/17, H01S 3/094

(54) **Pumpquelle zur breitbandigen optischen Verstärkung eines WDM-Signals**

(30) Priorität: 16.01.2001 DE 10101742
(71) Anmelder: SIEMENS AKTIENGESELLSCHAFT, 80333 München (DE)
(72) Erfinder: Neuhauser, Richard, 81477 München (DE)

(57) **Zusammenfassung**

Bei einem breitbandigen optischen Verstärker werden die Leistungen der unterschiedliche Wellenlängen aufweisenden Pumplaser (PL₁, PL₂, ...) einer Pumpquelle (PQ) so geregelt, daß alle Kanäle eines WDM-Signal (S) einen flachen Verlauf ihrer Pegel am Übertragungsfaserende aufweisen. Bei einem Defekt und besonders bei Ausfall oder Teilausfall von Pumplasern (PLᵢ) (i = 1, 2, ...) wird die entsprechende Veränderung des Gewinnverlaufs automatisch kompensiert. Die Pumpquelle (PQ) weist eine Überwachungs-Regel-Einrichtung (KRM) zur Neueinstellung der Pumpleistungen bei einer Fehlermeldung auf. Dadurch ändert sich das Gewinnspektrum aller Kanalpegel eines WDM-Signals bei fehlerhaftem Betrieb der Pumpquelle minimal. Neue Einstellungen der Pumpleistungen erfolgen durch eine Datenbank (DB), die zur Kompensation mehrerer fehlerhaften Vorfälle der Elemente der Regelschleife (PL₁, PL₂, ...; PD₁, PD₂, ...; KRM; RE₁, RE₂, ...) die entsprechenden Neukonfigurationen im Voraus enthält.

## Beschreibung

Die Erfindung betrifft eine Pumpquelle mit mehreren geregelten Pumplasern zur breitbandigen optischen Verstärkung eines WDM-Signals (Wellenlängenmultiplex) nach dem Oberbegriff des Patentanspruchs 1.

Es ist bekannt, daß ein optisches Signal bei der Übertragung durch eine optische Faser gedämpft wird. Deshalb müssen optische Signale nach Durchlaufen einer bestimmten Faserstrecke wieder verstärkt werden. Allgemein sind zwei physikalische Kriterien der optischen Übertragung von WDM-Signalen wesentlich: das Gewinnspektrum und der optische Signal-Rausch-Abstand OSNR. Bei WDM-Systemen muß das Gewinnspektrum oder die Verstärkung für alle Kanäle (Einzelsignale) des WDM-Signals annähernd konstant sein und der OSNR ausreichend groß sein. Im idealen Fall werden für alle Kanäle die Verläufe der Signalpegel und der optischen Signal-Rausch-Abstände OSNR eben sein. Raman-Verstärker bieten dabei deutliche Vorteile, da sie die Signale bereits in der Übertragungsfaser verstärkern. Die Übertragungseigenschaften werden auch entscheidend verbessert. Alle Kanäle am Ende der Faser sollten zumindest annähernd gleiche Amplituden aufweisen. Gerade bei Kaskadierung mehrerer Raman-Verstärker gewährleistet ein flaches Gewinspektrum, daß alle Kanäle in den Dynamikbereich der Empfänger fallen.

Bei einem optimalen System soll daher ein möglichst flaches Gewinnspektrum bzw. gleiche Ausgangspegel der einzelnen Kanäle am Ende des Übertragungsfaserabschnittes erreicht werden. Ein sehr flaches Gewinnspektrum über einem breiten Wellenlängenbereich läßt sich durch den Einsatz einer Pumpquelle mit einem breitbandigen Spektrum erzielen. Bisher bekannte breitbandige Raman-Verstärker für WDM-Übertragungssysteme arbeiten mit mehreren Pumplasern, deren Ausgangssignale unterschiedliche Wellenlängen aufweisen.

Als Pumpquellen werden oft Pumplaser mit niedrigen Ausgangsleistungen, z.B. Halbleiter-Laserdioden, vorgesehen. Bei Alterung, unberechenbaren Defekten oder durch externe Einflüsse (z.B. Temperatur) kann sich die Leistung der Pumplaser ändern. Im schlimmsten Fall können ein oder mehrere Pumplaser komplett ausfallen.
Das Gewinnspektrum der Verstärkung des WDM-Signals wird durch den Ausfall beeinträchtigt.

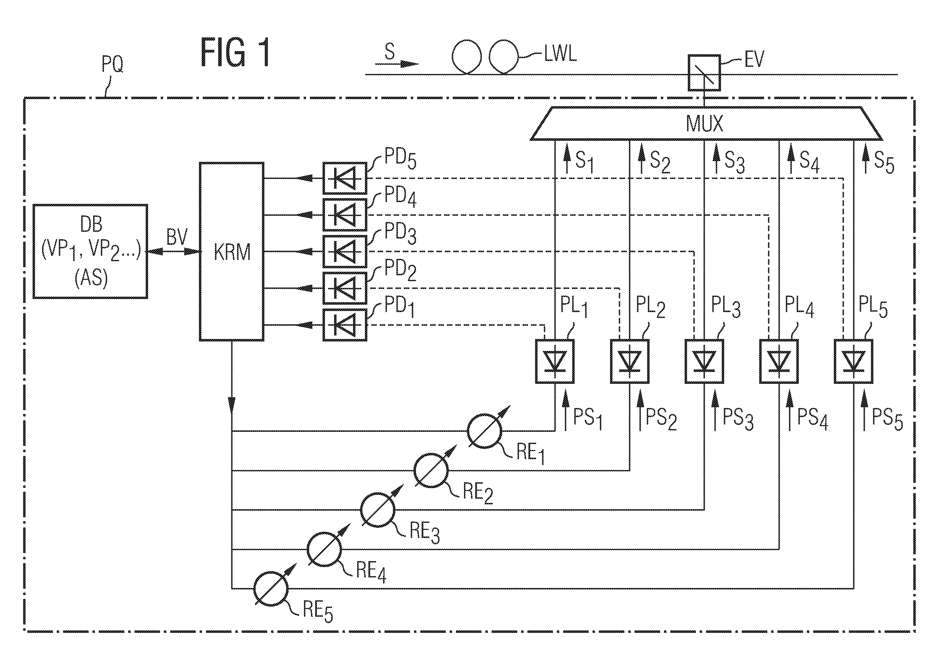

Aus "Method Of Modulating Feedback Signal In Optical Amplifier To Compensate For Pump Laser Saturation", US 5479423, ist eine Methode zur Vermeidung der Sättigung der Pumplasersignale von Pumplasern (mit LD 81, 82 gekennzeichnet) offenbart. Die Sättigung kann durch Alterung oder Temperaturschwankungen verursacht werden. Nach der Figur 1 erfolgt die Ansteuerung der Laserdioden 81, 82 über ein Kontrollmodul 4 und jeweils eine Laserstromquelle ("drive circuit" 71, 72). Die Regelung erfolgt mittels eines aufmodulierten "Feedback"-Signals SV. Bei Ausfall einer Laserdiode bietet aber diese Methode keine Kompensierung für eine optimale Verstärkung des Übertragungssignals.

In der Patentanmeldung EP 0932229 A2 sind eine Vorrichtung und eine Methode zur automatischen Kontrolle der Gesamtleistung mehrerer Pumpquellen eines optischen Verstärkers offenbart. Ziel dieses Verfahrens ist es, einen vordefinierten Gesamtgewinn bei Änderung der Pumpleistung oder Ausfall einer Pumpquelle konstant zu halten. Für eine Verstärkerstufe 100 (Fig. 1) werden die Signale mehrerer Pumpmodule 200, 300 in die Übertragungsfaser eingespeist.

Die Pumpmodule 200, 300 weisen jeweils eine Pumpquelle 210 und einen Schaltkreis zur Kontrolle der Pumpleistung auf. Das Ausgangssignal des Verstärkers wird über einen Splitter 120 und einen Leistungsdetektor 230, umgesetzt in ein erstes Referenzsignal 234, einem Kontrollmodul 270 der Pumpquelle 210 zugeführt. Ein zweites Referenzsignal 254 (error signal) wird aus der Differenz zwischen der aktuellen gemessenen Pumpleistung 210 und der mittleren Leistung der Pumpquellen der Pumpmodule gewonnen und dem Kontrollmodul 270 zugeführt. Zur Erhaltung der mittleren Leistung der Pumpquelle aller Pumpmodule ist ein Netzwerk erforderlich, um Informationen über die Ausgangsleistungen jeder Pumpquelle an alle anderen Pumpmodule zu liefern. Ein drittes Referenzsignal 264 in jedem Pumpmodul entspricht der Pumpleistung für einen erforderlichen Gewinn der Verstärkerstufe 100. Das Signal 264 wird, wie die zwei andere Referenzsignale 234, 254, dem Kontrollmodul 270 zugeführt. Aus den drei Referenzsignalen ermittelt das Kontrollmodul 270, welche Leistung der Pumpquelle 210 liefert. Im Betrieb werden also die Leistungen aller Pumpmodule abhängig von einem vordefinierten Gewinn überwacht. Bei Ausfall eines Pumpmoduls werden die Pumpleistungen der anderen Pumpmodule neu geregelt, damit der gewünschte Gesamtgewinn der Verstärkerstufe 100 seinen ursprünglichen Wert erreicht. Bei einer Verstärkung von WDM-Signalen ist eine Erweiterung der Pumpmodule mit mehreren Pumpquellen möglich, die unterschiedliche Wellenlängen aufweisen, (s. Spalte 9, Absatz 0034, Zeile 31-35). Die Neuregelung der Pumpleistungen wird aber bei Ausfall oder Alterung einer der Pumpquellen in einem Mehrwellenlängen-Pumpmodul bei dieser Literaturstelle nicht erwähnt. Außerdem werden keine Aussage zur Einebnung des Gewinnspektrums bei WDM-Übertragungssystemen gemacht.

Die Aufgabe der vorliegenden Erfindung besteht also darin, eine Mehrwellenlängen-Pumpquelle anzugeben, die bei Teilausfall oder Ausfall eines Pumplasers der Pumpquelle die Gewinnänderungen über die gesamte Bandbreite des WDM-Signals in einem minimalen Toleranzbereich hält.

Erfindungsgemäß wird diese Aufgabe durch eine Pumpquelle mit mehreren geregelten Pumplasern gelöst, die durch die Merkmale des Anspruchs 1 gekennzeichnet ist.

Zweckmäßige Weiterbildungen werden in den abhängigen Ansprüchen beschrieben.

Die Ausgangsleistungen der Pumplaser der erfindungsgemäßen Pumpquelle werden zunächst individuell überwacht und eingestellt, damit die Verstärkung für die gesamte Bandbreite des übertragenen WDM-Signals konstant ist. Der Vorteil der Erfindung ist, daß bei Ausfall eines Pumplasers (oder seltener eines anderen Elementes der Regelschleife) die intakten Pumplaser so gesteuert werden, daß der Gewinn über die gesamte Bandbreite des Übertragungssignals annähernd konstant bleibt. Ersatzlaser sind also nicht erforderlich.

Abhängig von der Art des Defektes erfolgt eine Neueinstellung der Ausgangsleistungen der intakten Pumplaser entsprechend neuer vordefinierten Parameter, die als Sätze in einer Datenbank, z. B. im Form einer Tabelle, gespeichert sind.

Von Vorteil ist es, daß die Datenbank DB durch eine neue Programmierung geändert werden kann, so daß weitere Betriebsfehler, z. B. Teilausfälle mehrerer Pumplaser bei einer langsamen Verschlechterung, kompensiert werden können.

Möglich ist es auch, die Neukonfiguration der Pumplaser durch eine externe Datenbank durchzuführen.

Damit ein Fehler identifiziert und zum Austausch des defekten Moduls gemeldet wird, wird bei fehlerhaftem Betrieb ein entsprechendes Alarmsignal ausgegeben.

Ein Ausführungsbeispiel der Erfindung wird anhand von Figuren näher beschrieben. Dabei zeigen:
Figur 1: Schaltbild der geregelten Pumpquelle mit mehreren Pumplasern,
Figur 2: Verstärkungsverläufe ohne und bei Ausfall eines Pumplasers,
Figur 3: Flußdiagramm zur Überwachung und Neueinstellung eines Pumpmoduls.

**Figur 1** zeigt das Schaltbild einer geregelten Pumpquelle PQ mit fünf Pumplasern PL₁, ..., PL₅, deren durch einen Multiplexer MUX zusammengefaßte Pumpsignale S₁, ..., S₅ in eine Übertragungsfaser LWL durch eine Einkoppeleinrichtung EV eingespeist werden. Dies kann in Richtung der WDM-Signalübertragung (kodirektionales Pumpen) oder entgegengesezt zur WDM-Signalübertragung (kontradirektionales Pumpen) erfolgen. Die Kanäle des WDM-Übertragungssignals S erfahren eine Raman-Verstärkung, wobei ein maximaler Gewinn bei einem Frequenzunterschied (oder Stokes-Shift) von 13,2 THz zwischen einem Pumpsignal und einem Kanal des Übertragungssignals S erfolgt. Zur Messung der Ausgangsleistung der Pumplaser PL₁, ..., PL₅ und zur Regelung der jeweiligen Pumpleistungen sind den Pumplasern PL₁, ..., PL₅ Photodioden PD₁, ..., PL₅ bzw. Laserstromquellen RE₁, ..., RE₅ zugeordnet, die an eine Überwachungs-Regel-Einrichtung KRM angeschlossen sind. Bei Ausfall eines Pumplasers oder allgemein bei einem Defekt eines Elementes, z.B. der Pumplaser PLᵢ, einer Regelschleife PLᵢ, PDᵢ, KRM oder REᵢ, mit 0<i<6 wird die Überwachungs-Regel-Einrichtung KRM die entsprechenden Fehlerinformationen der Datenbank DB melden. Nach Identifizierung des Fehlers werden neue vordefinierte Parameter VP₁, VP₂, ... in der Datenbank DB ausgewählt, die über die Überwachungs-Regel-Einrichtung KRM und weiterhin die Laserstromquellen RE₁, ..., RE₅ eine Neukonfiguration der Pumpströme PS₁, PS₂, PS₃, PS₅ (hier z.B. mit PS₄ = 0) bewirken. Ein Defekt wird mit Hilfe von in einer Datenbank DB gespeicherten vordefinierten Parametern VP₁, VP₂, ... kompensiert statt mittels einer Regelung, die das Ausgangssignal am Ende der Übertragungsstrecke LWL überwacht.

Außerdem wird ein Alarmsignal AS zur externen Meldung des Fehlers an einen Operator erzeugt. Nach dem entsprechenden Austausch des fehlerhaften Pumplasers wird das Alarmsignal AS zurückgestellt, damit wieder die dem fehlerfreien Betrieb entsprechenden vordefinierten Parameter VP₁, VP₂... verwendet werden. Bei abweichenden Eigenschaften des neu implementierten Elements kann eine Eingabe neuer vordefinierten Parameter VP₁, VP₂, ... in die Datenbank DB erforderlich sein.
Die Datenbank DB kann auch für unterschiedliche Fehlermoden erweitert werden, so daß auch Teilausfälle eines oder mehrerer Pumplasers PLᵢ, von Laserstromquellen REᵢ (i>0) oder Photodetektoren PDᵢ (i>0) kompensiert werden. Wenn durch eine Photodiode PDᵢ das Fehlen eines Pumpsignals oder der Leistungsabfall bis unterhalb einer Schwelle an der Überwachungs-Regel-Einrichtung KRM angezeigt wird, wird die entsprechende Laserstromquelle REᵢ ausgeschaltet, da unterschiedliche Fehler im Steuerkreis KRM, PDᵢ, PLᵢ, REᵢ vorliegen können.

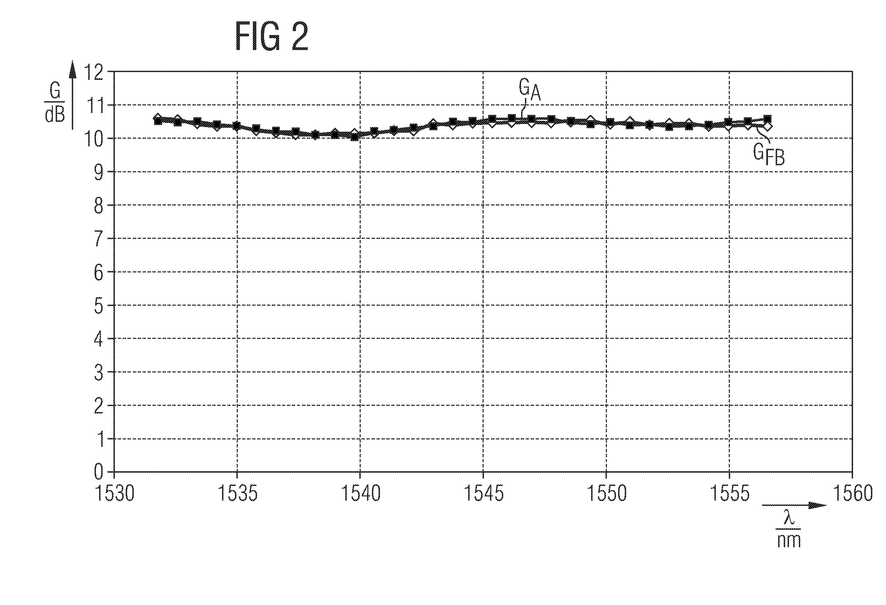

**Figur 2** zeigt das Gewinnspektrum G_{FN} bei fehlerfreiem Betrieb und das kompensierte Gewinnspektrum G_{A} bei Ausfall des vierten Pumplasers PL₄ der Figur 1 als Funktion der Wellenlänge λ. Durch die entsprechende Neukonfiguration der Pumpströme sind nur Unterschiede zwischen den zwei Gewinnverläufen von weniger als 0,5 dB festzustellen.

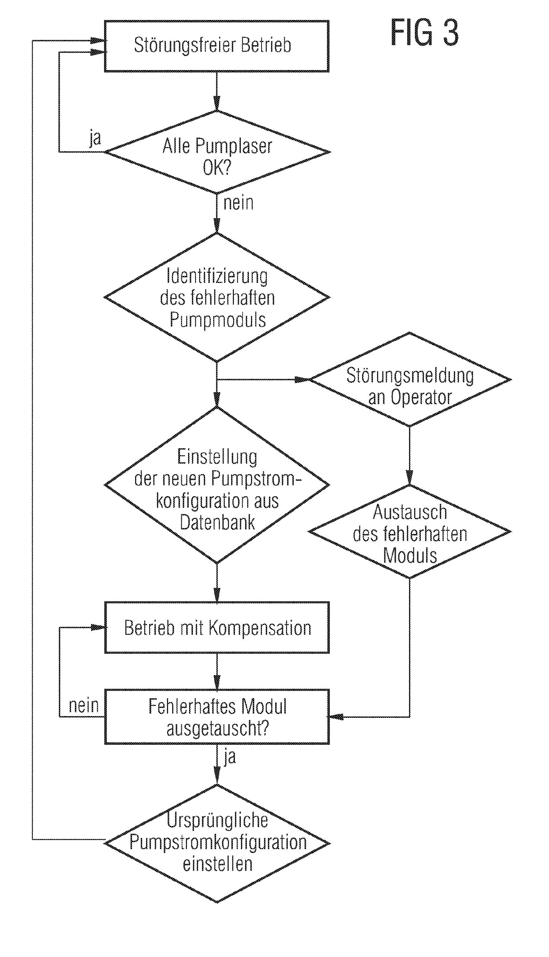

Anhand von **Figur 3** wird das Verfahren zur Überwachung eines fehlerhaften Elementes, insbesondere eines Pumplasers, in den Regelschleifen KRM, PDᵢ, PLᵢ, REᵢ (i>0) erläutert. Als erstes wird die Funktion aller Pumplaser überprüft. Der entsprechende Pumplaser (es kann sich auch um ein anderes defektes Element der Regelschleife handeln) wird identifiziert, dann wird entsprechend dem Fehler aus der Datenbank DB ein Datensatz zur Neueinstellung der Pumpströme der betriebsfähigen Pumplaser abgerufen und es erfolgt deren Einstellung. Außerdem erfolgt eine Störungsmeldung an den Operator. Solange das fehlerhafte Element (z.B. Pumplaser) nicht ausgetauscht wird, bleibt die Störmeldung erhalten. Nach dem Austausch des fehlerhaften Elementes erfolgt wieder die ursprüngliche Pumpstromeinstellung für störungsfreien Betrieb.

Die Überwachung wird so konzipiert, daß bei einer Neukonfiguration der Pumpquellen die Übertragung des WDM-Signals möglichst nicht gestört wird.

## Patentansprüche

1. Pumpquelle (PQ) mit mehreren geregelten Pumplasern (PL₁, PL₂, ...) zur Erzielung einer konstanten breitbandigen Verstärkung eines über eine optische Faser (LWL) übertragenen Wellenlängen-Multiplex (WDM)-Signals (S),
**dadurch gekennzeichnet,**
**daß** eine Datenbank (DB) vorgesehen ist, in der eine Tabelle (T) unterschiedliche Sätze von vordefinierten Parametern (VP₁, VP₂, ...) zur Einstellung der Ausgangsleistungen der Pumplaser (PL₁, PL₂, ...) enthält,
**daß** eine Überwachungs-Regel-Einrichtung (KRM) zur Überwachung und Regelung von den Pumplasern (PL₁, PL₂, ...) erzeugten Pumpsignale (S₁, S₂, ...) vorgesehen ist, die mit der Datenbank (DB) korrespondiert und bei Ausfall eines Pumplasers oder mehrerer Pumplaser (PLᵢ) (i= 1, 2, ..) die Ausgangsleistungen der intakten Pumplaser (PL₁, PL₂, ...) entsprechend der diesem Ausfall zugeordneten vordefinierten Parameter (VP₁, VP₂, ...) so einstellt, daß alle optische Kanäle des WDM-Signals (S) weiterhin annähernd gleiche Pegel aufweisen.

2. Pumpquelle nach Anspruch 1,
**dadurch gekennzeichnet,**
**daß** als Pumplaser (PL₁, PL₂, ...) Laserdioden eingesetzt sind,
**daß** Photodetektoren (PD₁, PD₂, ...) an Ausgänge der Laserdioden (PL₁, PL₂, ...) zur Überwachung der Pumpsignale (S₁, S₂, ...) und steuerbare Pumpstromquellen (RE₁, RE₂, ...) Steuereingängen der Laserdioden (PL₁, PL₂, ...) zur Einstellung von Pumpströmen (PS₁, PS₂, ...) vorgeschaltet sind,
**daß** die Überwachungs-Regel-Einrichtung (KRM) an die Photodetektoren (PD₁, PD₂, ...) angeschaltet ist und in Abhängigkeit von den vordefinierten Parametern (VP₁, VP₂, ...) die Pumpströme über die steuerbaren Pumpstromquellen (RE₁, RE₂, ...) einstellt,
**daß** durch einen Wellenlängenmultiplexer (MUX) die Pumpsignale (S₁, S₂, ...) zusammengefaßt werden und
**daß** eine Einkoppeleinrichtung (EV) am Anfang oder am Ende eines Übertragungsfaserabschnittes (LWL) angeordnet ist, über die die zusammengefaßten Pumpsignale (S₁, S₂, ...) in die Übertragungsfaser (LWL) parallel oder entgegen der Übertragungsrichtung des WDM-Signals (S) eingespeist werden.

3. Pumpquelle nach einem der vorhergehenden Ansprüche,
**dadurch gekennzeichnet,**
**daß** die Datenbank (DB) über eine Datenverbindung an die Überwachungs-Regel-Einrichtung (KRM) angeschaltet ist, über die eine Zustandsmeldung der Pumpsignale (S₁, S₂, ...) erfolgt und eine dieser Zustandsmeldung entsprechende Ausgabe der vordefinierten Parameter (VP₁, VP₂, ...) an die Überwachungs-Regel-Einrichtung (KRM) erfolgt.

4. Pumpquelle nach einem der vorhergehenden Ansprüche,
**dadurch gekennzeichnet,**
**daß** die Datenbank (DB) intern oder extern angeordnet ist und daß die vordefinierten Parameter (VP₁ , VP₂, ...) insbesondere extern neu einstellbar sind.

5. Pumpquelle nach einem der vorhergehenden Ansprüche,
**dadurch gekennzeichnet,**
**daß** sie ein Alarmsignal (AS) zur Identifizierung und zur externen Meldung eines Ausfalls oder Teilausfall eines Pumpsignale (S₁, S₂, ...) abgibt.

6. Pumpquelle nach einem der vorhergehenden Ansprüche,
**dadurch gekennzeichnet,**
**daß** sie bei einem Teilausfall eines Pumpsignals (S₁, S₂, ...) dieses abschaltet.

7. Pumpquelle nach einem der Ansprüche 1 bis 6,
**dadurch gekennzeichnet,**
**daß** die Tabelle weitere Sätze von vordefinierten Parametern (VP₁, VP₂, ...) zur Neukonfiguration bei Ausfällen und/oder Teilausfällen von mehreren Pumpsignalen (S₁, S₂, ...) enthält.

8. Verfahren zur Erzielung einer konstanten breitbandigen optischen Verstärkung eines WDM-Signals (S) durch das Einspeisen mehrerer Pumpsignale (S₁, S₂, ...) von geregelten Pumplasern (PL₁, PL₂, ...),
**dadurch gekennzeichnet,**
• **daß** die Pumpsignale (S₁, S₂, ...) durch Photodetektoren (PD₁, PD₂, ...) und eine Überwachungs-Regel-Einrichtung (KRM) separat überwacht werden,
• **daß** bei Ausfall oder Teilausfall eines der Pumpsignale (S₁, S₂, ...) aus einer Datenbank (DB) ein Satz von mehreren vordefinierten Parametern (VP₁, VP₂, ...) zur Neukonfiguration der übrigen Pumpsignale (S₁, S₂, ...) abgerufen wird und
• **daß** die Leistungen der Pumpsignale (S₁, S₂, ...) von betriebsfähigen Pumplasern derart eingestellt werden, daß weiterhin ein möglichst konstanter Verlauf der breitbandigen Verstärkung erhalten bleibt.

9. Verfahren nach Anspruch 8,
**dadurch gekennzeichnet,**
• **daß** bei Ausfall oder Teilausfall eines der Pumplaser (PL₁, PL₂, ...) ein Alarmsignal (AS) ausgegeben wird,
• **daß** das Alarmsignal (AS) Information zur Identifizierung eines fehlerhaften Pumplasers PLᵢ (i>0) oder eines anderen fehlerhaften Elementes (REᵢ, PDᵢ) einer Regelschleife (KRM, PLᵢ, REᵢ, PDᵢ) beinhaltet.

10. Verfahren nach Anspruch 8 oder 9,
**dadurch gekennzeichnet,**
**daß** bei Austausch eines fehlerhaften Pumplasers (PLᵢ) (i>0) oder weiterer Elemente (REᵢ, PDᵢ) in der Regelschleife dieses Pumplasers den unterschiedlichen Eigenschaften der Elemente entsprechende vordefinierte Parameter (VP₁, VP₂, ...) in der Datenbank (DB) neu eingestellt werden.
